# EUROPEAN PATENT APPLICATION

(11) **EP 2 096 417 A1**
(43) Date of publication of application: **02.09.2009**
(21) Application number: 09154116.9
(22) Date of filing: 02.03.2009
(51) Int. Cl.: G01D 9/00

(54) **Data logger with indicia surface**

(30) Priority: 29.02.2008 US 40042
(71) Applicant: Omega Engineering, Inc., Stamford, CT 06907-0047 (US)
(72) Inventor: Hollander, Milton, Stamford, CT, 06906 (US); Macchiarelli, Michael A. Jr, SHELTON CONNECTICUT, 06484 (US)
(74) Representative: Schmit, Christian Norbert Marie

(57) **Abstract**

A data logger includes an enclosure, one or more sensors within the enclosure for recording environmental conditions, and a base surface treated to facilitate marking and located within a perimeter of an outer surface of the enclosure.

## Description

### BACKGROUND

The disclosed embodiments are directed to a data logger for recording environmental conditions.

During shipment, products may be subject to a number of environmental conditions including for example, variations in temperature, humidity, vibration, etc. Information regarding the range of environmental conditions that a product may have experienced during shipment is helpful in determining the condition of the product upon arrival at a destination. A data logger may be included with the product that may gather environmental data during transport. Upon arrival at a destination, the data may be retrieved and analyzed. Once acquired, the data may be used, for example, to determine the condition of the product, to enhance the packaging design, and to improve the design of the product itself.

When a number of data loggers are collected together, it may be difficult to identify one from the other, the product to be, or that has been, monitored, the route a product may take, different transportation methods that the product may experience, or to otherwise identify a particular aspect of an individual data logger, or the monitored product. Some data loggers include identifying bar codes but these are not human readable and require a device to decipher. A data logger may also have a serial number, however this may not provide the specific information required.

It would be advantageous to provide a data logger that is inexpensive, easily activated, having a form factor that allows use with existing packaging, and that provides easy access to collected data. It would be additionally advantageous to provide a surface on the data logger for providing markings or other indicia on the data logger.

### SUMMARY

In one embodiment, a data logger includes an enclosure, one or more sensors within the enclosure for recording environmental conditions, and a base surface treated to facilitate marking and located within a perimeter of an outer surface of the enclosure.

### BRIEF DESCRIPTION OF THE DRAWINGS

The foregoing aspects and other features of the present invention are explained in the following description, taken in connection with the accompanying drawings, wherein:

Figure 1 shows a schematic diagram of an exemplary data logger according to the disclosed embodiments;

Figure 2 shows an exemplary data logger and a system interface for retrieving data from the data logger; and

Figures 3A-3C illustrate mechanisms for providing markings or other indicia on the data logger.

### DETAILED DESCRIPTION

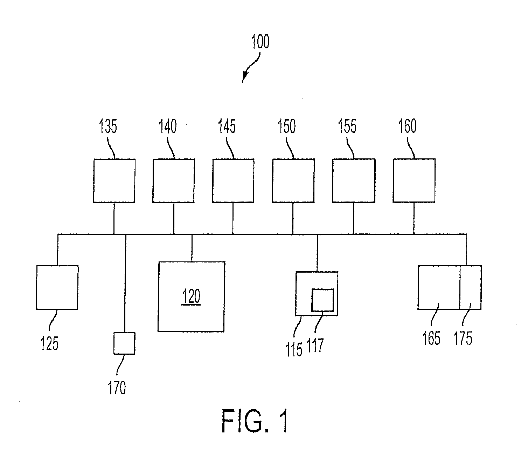

Referring to Figure 1, an exemplary data logger 100 incorporating features of the disclosed embodiments is illustrated. Although the present invention will be described with reference to the embodiment shown in the drawings, it should be understood that the present invention can be embodied in many alternate forms of embodiments. In addition, any suitable size, shape or type of elements or materials could be used.

Data logger 100 generally includes a data acquisition and recording function performed by one or more sensors, a data communications function for exchanging data with an external device, and an identification function that allows a user to provide identifying indicia to the data logger 100.

The exemplary data logger 100 is shown schematically in Figure 1 and has a form factor that may be easily included within a package without changing any packaging or shipping requirements. Data logger 100 may include control circuitry 120, memory 115, a power source 125, one or more sensors 130, a sensor interface 160 to accommodate additional sensors, a communications port 165, and an activation switch 170.

Control circuitry 120 may include logic circuitry for generally controlling the operation of data logger 100 including analog to digital and digital to analog converters, level shifters, multiplexers, demultiplexers, and any other circuitry for providing the functionms described herein. Control circuitry 120 may operate in conjunction with memory 115. For example, control circuitry 120 may Include a processor that operates programs 117 stored in memory 115. Memory 115 may provide storage for measurements acquired by the one or more sensors 130. Memory 115 may be configured as a non-volatile memory which retains its contents in the event of a power loss.

Power source 125 may use any suitable battery of power cell construction and generally supplies power to the components of data logger 100.

The one or more sensors 130 may include sensors for detecting various types of conditions, for example environmental conditions, locations, or time periods. More particularly, sensors 130 may include, for example, a humidity sensor 135, a temperature sensor 140, an accelerometer 145, a timer 150, and a global positioning system (GPS) sensor 25. Each of the one or more sensors 130 may include suitable support circuitry, for example, amplifiers, filters, and converters, and may be capable of providing an analog output or a digital output as required. Each of the sensors 130 may be connected individually or via a bus to other circuitry, and may also be capable of generating an interrupt, alarm, or some other type of alert in the event that one or more particular conditions exist, or that any number of thresholds have been exceeded or have not been met. One or more of the sensors 130 may include a "sample and hold" capability where a particular measurement may be latched or otherwise held until read from the particular sensor. Any number of the sensors 130 may also include identifying circuitry for allowing another device to determine the presence, location, type, and capabilities of each sensor 130 having such circuitry.

Timer 150 may be capable of measuring elapsed time or particular time periods. Timer 250 may also be capable of providing a time stamp for measurements made by other sensors. Timer 150 may be a programmable device capable of starting or stopping upon receiving a trigger and of generating a signal upon the expiration of a particular period. Timer 150 may be triggered by other sensors of data logger 100. For example, timer 150 may be used to measure total time spent in the distribution channel, an amount of time spent at a particular humidity level, or an amount of time spent below a particular temperature threshold.

GPS sensor 155 is generally capable of receiving signals from the Global Positioning System and providing information related to the global location of data logger 100. GPS sensor 155 may include support circuitry for converting the received signals to coordinates and for conveying those coordinates to other circuitry of data logger 100.

Sensor interface 160 provides a connection point for any additional sensors that may be desired. Sensor interface 160 may include one or more connectors, clips, pads, or other devices for providing electrical contacts for connecting sensors within data logger 100. In addition, sensor interface 160 may include through holes, pins, standoffs or other mounting devices for physically supporting the additional sensors.

Communications port 165 provides a communications Interface to an external device such as a computer. Communications port 165 may provide any suitable wired or wireless interface including, but not limited to, cellular, Bluetooth®, radio frequency (RF), infrared (IR), and Zigbee® protocols, RS 232, 422, or universal serial bus (USB). Communications port 165 may Include a connector 175 for a wired interface.

Activation switch 170 may be coupled to one or more of the components of the data logger 100 and may operate to cause the data logger 100 to begin operations. Upon operating the activation switch, controller 120 may initialize and cause the other components of the data logger 100 to initialize. Programs 117 may then cause the controller 120 to determine the presence type and capabilities of sensors 130 and set thresholds and alert parameters as appropriate for measuring particular conditions. Individual ones of sensors 130 may also set up to generate Interrupts upon reaching or failing to reach certain thresholds, or generally upon measuring certain conditions. Timer 150 may also be programmed to generate an interrupt for controller 120 on a periodic or other basis. In other embodiments, operating the activation switch may cause initialization and operation of the data logger to occur at a later time which may be user selectable.

After completing the above mentioned initialization and setup procedures, controller 120 may then enter a "sleep" mode having limited functionality and power requirements. Upon receiving an interrupt from timer 150 or any of the other sensors 130, controller 120 may exit the sleep mode, examine the interrupt and identify a service routine to be performed. For example, an interrupt may be serviced by reading the current humidity from humidity sensor 135, the current temperature from temperature sensor 140, and a time value from timer 150. A date and time stamp may then be generated from the time value, associated with the temperature and humidity measurements, and then the measurements and associated time and date stamp may be stored in memory 115. The contents of memory 115 may be retained until the data logger 100 reaches a destination.

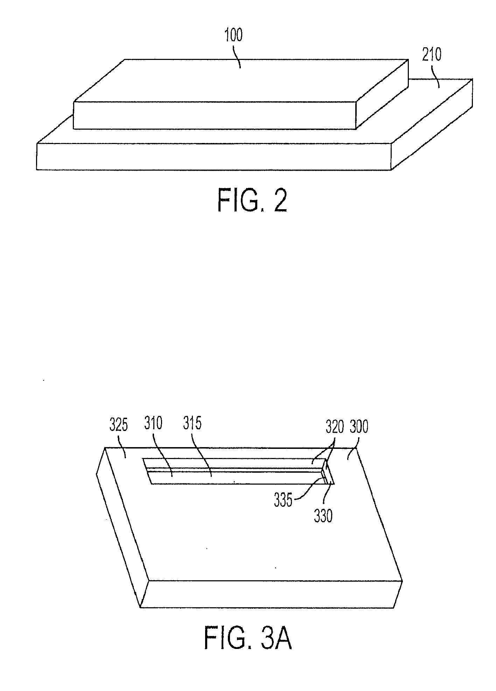

Figure 2 shows an exemplary data logger 100 and a system interface 210 for retrieving the contents of memory 115. In one embodiment, the contents of memory 115 may be obtained by plugging a suitable connector into connector 175 of communications port 165. In other embodiments, the contents of memory 115 may be obtained by a wireless request or communication from system interface 210. Upon receiving the request, controller 120 may cause the measurements stored in memory 115 to be transmitted to the system interface 210. The system interface 210 may convey the retrieved measurements to another device for processing and analysis, either directly or through a network.

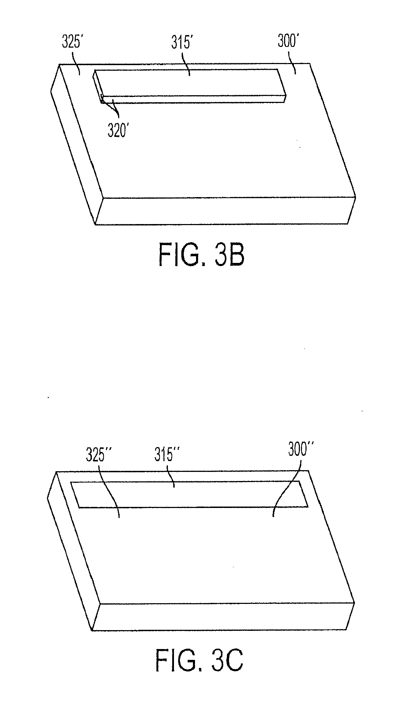

Figures 3A-3C illustrate mechanisms for providing markings or other indicia on the data logger 100. In Figure 3A, an enclosure 300 of the data logger includes a display window 310. The display window 310 includes a base surface 315, recessed below an outer surface 325 of enclosure 300, surrounded by side walls 320. Side walls 320 extend between base surface 315 and outer surface 325. An opposed pair of sidewalls 330 may be provided with grooves 335 opening toward each other, to capture a flexible display material or clear protective window between them. The display material may have indicia affixed or marked thereon directly. In Figure 3B base surface 315' is raised above outer surface 325' and sidewalls 320' extend outwardly from the outer surface 325' of enclosure 300'. In both Figures 3A and 3B, sidewalls 320, 320' operate to protect base surface 315, 315' from inadvertent wiping or other motion that may dislodge or otherwise deface indicia on the base surface. Figure 3C shows an embodiment where base surface 315" is located flush or on outer surface 325" of enclosure 300".

Any suitable indicia may be positioned on base surface 315, 315', 315" by affixing written or printed labels, by marking directly, or by any other marking scheme. Base surface 315, 315', 315" is generally located within a perimeter of an outer surface 325, 325', 325" of enclosure 300, 300', 300" and may be textured or otherwise treated to facilitate marking as well as removal of markings. Base surface 315, 315', 315" is advantageous because it allows a user to apply indicia, for example, human readable indicia, to data logger 100. The applied human readable indicia may be read without machine assistance, for example, without utilizing a reading device, a bar code reader, scanner, computer or other device.

While the disclosed embodiments have been discussed in the context of recording shipping conditions, it should be understood that the present invention may also be used to monitor conditions during any phase of a product life cycle. For example, data logger 100 could be used to detect improper storage or operating temperatures that may void a warranty for sensitive equipment. Data logger 100 may also be used to sense conditions that may signify abuse or use beyond rated specifications.

It should be understood that the foregoing description is only illustrative of the present embodiments. Various alternatives and modifications can be devised by those skilled in the art without departing from the embodiments disclosed herein, Accordingly, the embodiments are intended to embrace all such alternatives, modifications and variances which fall within the scope of the appended claims.

## Claims

1. A data logger comprising:
an enclosure;
one or more sensors within the enclosure for recording environmental conditions;
a base surface located within a perimeter of an outer surface of the enclosure treated to facilitate marking.

2. The data logger of claim 1, wherein the base surface is located on the outer surface of the enclosure.

3. The data logger of claim 1, wherein the base surface provides a surface for markings readable without machine assistance.

4. The data logger of claim 1, further comprising side walls extending between the base surface and the outer surface.

5. The data logger of claim 4, wherein the base surface is recessed from the outer surface.

6. The data logger of claim 4, wherein the base surface is raised from the outer surface.
